# FASCICULE DE BREVET EUROPEEN

(11) **EP 1 669 262 B1**
(45) Date de publication et mention de la délivrance du brevet: **24.06.2009**
(21) Numéro de dépôt: 05292655.7
(22) Date de dépôt: 13.12.2005
(51) Int. Cl.: B60R 21/34, B62D 25/10

(54) **Capot de véhicule automobile muni d'absorbeurs**
Kraftfahrzeughaube mittels Dämpfern
Car hood with absorbers

(30) Priorité: 13.12.2004 FR 0413234
(43) Date de publication de la demande: 14.06.2006
(73) Titulaire: COMPAGNIE PLASTIC OMNIUM, 69007 Lyon (FR)
(72) Inventeur: Rocheblave, Laurent, 69100 Villeurbanne (FR); Roux, Jean-Pierre, 69480 Pommiers (FR); Cheron, Hugues, 01800 Meximieux (FR)
(74) Mandataire: Remy, Vincent Noel Paul

(56) Documents cités:
- EP-A- 1 293 416
- EP-A- 1 300 302
- EP-A- 1 362 768
- DE-A1- 10 059 795
- DE-A1- 10 136 898
- US-A- 5 988 305

## Description

L'invention a pour objet un capot destiné à être monté à l'avant d'un véhicule automobile, le capot comprenant une face visible et une face opposée, le capot étant apte à prendre au moins une position fermée dans laquelle la face opposée du capot recouvre au moins une zone rigide de l'avant du véhicule.

Plus précisément, l'invention concerne un capot apte à protéger un piéton en cas de choc.

Pour protéger les piétons, il est nécessaire d'assouplir les zones du véhicule susceptibles d'entrer en collision avec la tête. Les concepts actuels mettent en oeuvre des supports déformables aux jonctions aile/capot, implantés sur le renfort d'aile.

Compte-tenu des multiples possibilités en termes d'architecture et de découpage aile/capot, chacune de ces pièces participe différemment d'un véhicule à l'autre en cas de choc avec la tête.

Par exemple, pour le cas d'un choc tête à la jonction aile/capot, c'est le style de l'aile qui fixe la limite de la zone à protéger. Selon le style, l'aile est peu ou beaucoup impliquée. Par conséquent, les butées ou supports d'ailes actuels implantés sous l'aile ont peu d'effet dans le cas où l'aile intervient peu dans le choc.

EP 1 300 302 A2 décrit un capot selon le préambule de la revendication 1.

Les inventeurs ont mis en évidence qu'il serait préférable de travailler la raideur de la zone du capot susceptible d'être impactée afin qu'il puisse se déformer en flexion entre ses appuis avant (butées) et arrière (charnières) et qu'il permette aussi d'amortir un éventuel impact sur les éléments structuraux qui sont en dessous (coupelles d'amortisseur, longeron supérieur selon son implantation). Cette raideur doit être adaptée dans chaque section transversale du véhicule, selon sa position longitudinale, car les éléments potentiellement impactés sont plus ou moins éloignés d'une section à l'autre. De même avec l'apparition des capots en V, l'implication de l'aile et donc le besoin en raideur varient d'une section à l'autre.

L'invention propose de fournir un capot qui offre une meilleure protection des piétons en cas de choc.

A cet effet, l'invention a pour objet un capot ayant les caractéristiques de la revendication 1.

Grâce à l'invention, l'absorbeur permet d'amortir un éventuel impact avec une zone rigide qui est en dessous du capot (coupelles d'amortisseur, longeron supérieur selon son implantation). Ainsi, on limite les risques que le piéton rencontre un point dur lors d'un choc.

Un capot selon l'invention peut en outre comprendre l'une ou plusieurs des caractéristiques suivantes.
- Le capot comprend une peau sous laquelle est rapporté l'absorbeur.
- Le capot comprend une peau et une doublure, la doublure étant conformée pour constituer au moins une partie de l'absorbeur. Par exemple, on peut concevoir une doublure en matière plastique, l'absorbeur étant venu de moulage avec la doublure. Cela permet une conception simple et peu onéreuse ainsi qu'un gain de temps de fabrication et un gain de masse.
- La doublure est conformée pour que l'ensemble de la peau et de la doublure forme localement un corps creux constituant l'absorbeur. Le corps creux absorbe les chocs en s'écrasant, s'effondrant ou en flambant.
- L'absorbeur est en périphérie du capot, le capot comprend en outre un bandeau périphérique prolongeant la peau, et la doublure est conformée pour que l'ensemble du bandeau et de la doublure forme localement un corps creux constituant l'absorbeur. Possibilité d'introduire une notion de réparabilité compatible avec de la protection piéton : à l'issue d'un choc piéton, certains bandeaux peuvent être remplacés sans qu'il soit nécessaire de changer le capot complet. Si l'absorbeur est à l'avant du capot, en cas de choc du véhicule contre un mur, seul le bandeau doit être changé.
- La doublure comprend, au niveau du corps creux, un réseau de nervures agencées pour procurer au corps creux une raideur déterminée. En particulier, en jouant sur la forme, la taille ou l'espacement entre les nervures, on peut adapter la raideur du corps creux en fonction de sa position sur le capot. On peut par exemple créer des zones situées à l'avant du capot destinées à absorber des chocs avec des enfants et des zones situées à l'arrière du capot destinées à absorber des chocs avec des adultes. Ainsi, on diminue la masse du produit par l'utilisation de matières plastiques avec des raideurs juste nécessaires en fonction de la localisation.
- Le capot comprend une peau et un bandeau périphérique, la périphérie de la peau étant conformée pour que l'ensemble de la peau et du bandeau forme localement un corps creux constituant l'absorbeur.
- Le bandeau comprend, au niveau du corps creux, un réseau de nervures agencées pour procurer au corps creux une raideur déterminée.
- Le capot est constitué par au moins un élément constitutif de capot tel qu'une peau, le capot comportant au moins un corps creux de raideur déterminée à la périphérie du capot, le corps creux étant formé partiellement par un élément constitutif du capot et par un bandeau rapporté sur cet élément constitutif.
- Le bandeau est formé sur une peau en acier d'un capot : la couche en acier offre un appui au bandeau déformable qui s'écrase dessus, le mouvement d'ensemble du corps creux ainsi crée pouvant être un mouvement de flexion.
- Au moins un bandeau comprend des nervures disposées et calibrées selon qu'elles amortissent une tête enfant ou adulte et selon le recouvrement de la tête avec l'aile.
- Au moins un bandeau est intégré à la doublure de capot et réalise un cadre périphérique venant en appui sur des éléments de structure se trouvant dessous et fonctionnant globalement en compression jusqu'à générer un effondrement (écrasement ou rupture) permettant de diminuer la décélération de la tête du piéton.
- Au moins un bandeau est rapporté et intègre un airbag, en favorisant son déploiement du fait de la présence d'une lame souple qui le fait déployer entre la peau et la doublure du capot.
- La doublure de capot est bi-matière afin que le besoin en raideur au centre du capot soit assez faible (flexion globale + espace disponible dessous) et que la raideur sur la périphérie soit plus importante, notamment dans le cas où, à cause de la faible course d'enfoncement disponible, on envisage une rupture d'un plot venant s'écraser sur les coupelles d'amortisseur (car dans ce cas, il faut un matériau raide et fragile sur les côtés pour monter très rapidement en effort et absorber un maximum d'énergie dès le début du choc jusqu'à un niveau de rupture permettant de relâcher la tête et de faire diminuer la décélération).

Afin de mieux faire comprendre l'invention, on va en décrire des exemples de réalisation non limitatifs, en référence aux figures annexées :
- la figure 1 représente un véhicule automobile dont le capot selon l'invention comporte, à l'arrière, à la base de son pare-brise, un bandeau, visible grâce à un arraché partiel dont un agrandissement est fourni,
- la figure 2 représente un autre véhicule automobile dont le capot selon l'invention comporte, sur chaque côté, un bandeau, visible grâce à un arraché partiel dont un agrandissement est fourni,
- les figures 3 à 6 sont des schémas selon une coupe transversale d'un capot selon plusieurs modes de réalisation.

**Vocabulaire**

| général | de l'exemple | référence sur les dessins |
|---|---|---|
| Capot | Capot | 1, 1' |
| Peau de capot | Peau de capot | 2, 2' |
| Bandeau rapporté | Bandeau | 4, 5 |
| Corps creux | Corps creux | 3, 3' |
| Blocs optiques | Blocs optiques | 6 |

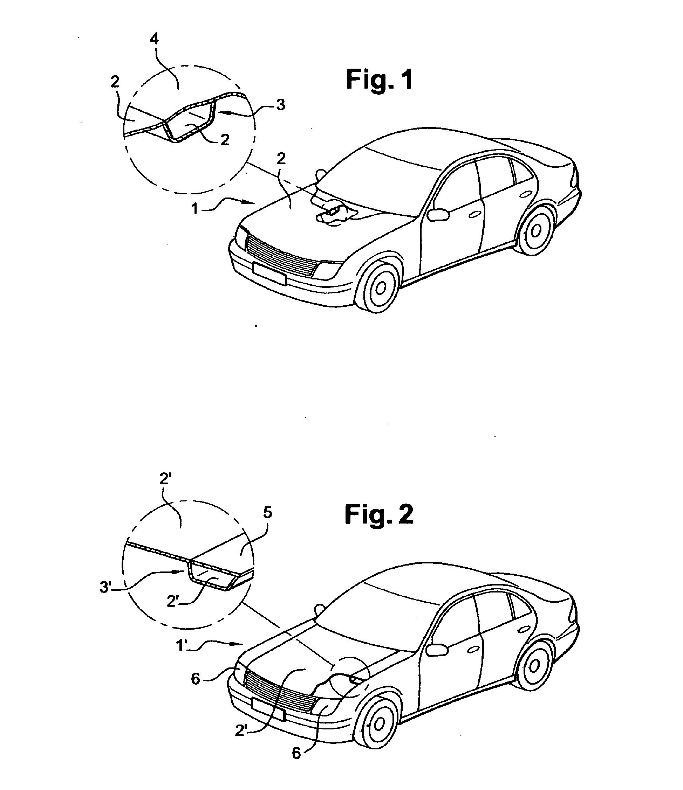

On a représenté sur les figures 1, 2, 5 et 6 différents modes de réalisation d'un capot 1 selon l'invention, destiné à être monté à l'avant d'un véhicule automobile, le capot 1 comprenant une face visible 7 et une face opposée 8. Le capot 1 est apte à prendre au moins une position fermée dans laquelle la face opposée 8 recouvre au moins une zone rigide 9 de l'avant du véhicule.

La zone rigide 9 peut être par exemple le moteur du véhicule, des coupelles d'amortisseurs ou des longerons supérieurs.

Dans tous les modes de réalisation représentés, la face opposée 8 comprend au moins un absorbeur 10 agencé de façon à être en regard de la zone rigide 9 lorsque le capot 1 est en position fermée.

La fonction de l'absorbeur 10 est d'amortir les chocs avec un piéton. Grâce à l'absorbeur, en cas de choc avec un piéton, le piéton ne risque pas de heurter directement les zones rigides 9 situées sous le capot 1 du véhicule automobile. Ainsi, la décélération du piéton est progressive, ce qui réduit les traumatismes.

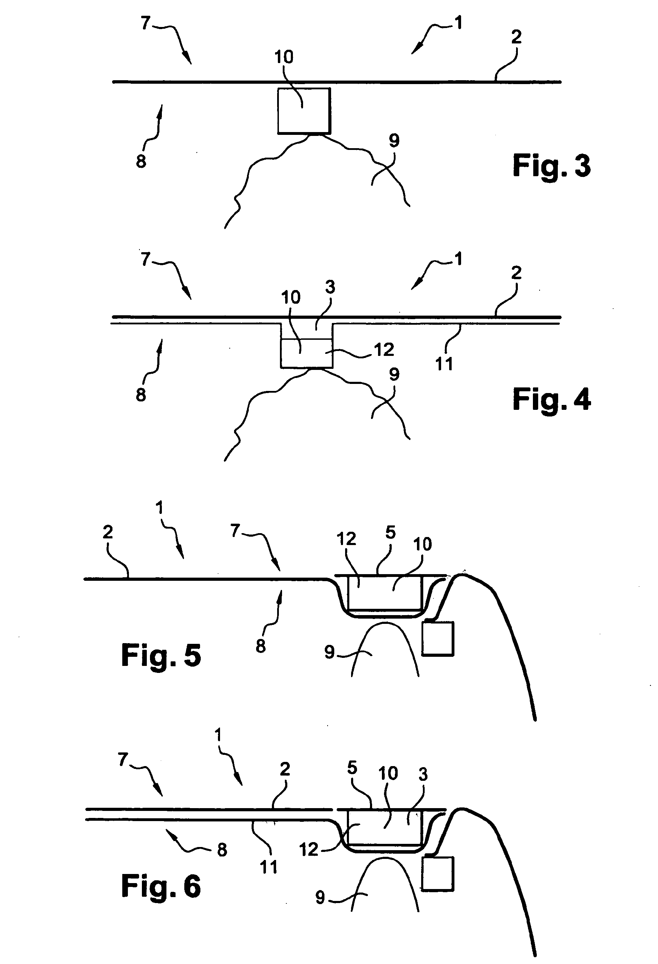

Selon un exemple de l'état de technique représenté sur la figure 3, l'absorbeur 10 est rapporté sous la peau 2 du capot 1. Cet absorbeur 10 peut être fixé à la peau 2 par tout moyen de fixation connu.

La répartition des absorbeurs 10 sous la peau 2 du capot 1 est fonction de la répartition des zones rigides sous le capot. Les absorbeurs 10 peuvent être rapportés sous le capot en dehors de la chaîne de fabrication du véhicule automobile. Ainsi, on rapporte le capot muni des absorbeurs 10 en une seule opération de montage.

Selon un deuxième exemple de l'état de technique représenté sur la figure 4, le capot comprend la peau 2 et une doublure 11 de capot, la doublure 11 étant conformée pour constituer au moins une partie de l'absorbeur 10. La doublure 11 est une pièce en matière thermoplastique qui suit sensiblement les contours de la peau 2 de capot 1 en dehors des zones du capot en regard des zones rigides 9. Localement, au niveau des zones rigides 9, la doublure de capot est éloignée de la peau 2 du capot 1 si bien que l'ensemble de la peau 2 et de la doublure 11 forme localement un corps creux 3 constituant l'absorbeur 10.

Comme cela est visible sur la figure 4, au niveau du corps creux 3, la doublure 11 comprend un réseau de nervures 12 agencées pour procurer au corps creux 3 une raideur déterminée. Le réseau de nervures 12 est venu de moulage avec la doublure 11.

Selon un troisième mode de réalisation représenté sur les figures 1, 2 et 5, le capot 1 comprend la peau 2 et un bandeau périphérique 4, 5, la périphérie de la peau 2 étant conformée pour que l'ensemble de la peau 2 et du bandeau 4, 5 forme localement un corps creux 3 constituant l'absorbeur 10.

Ainsi, en périphérie du capot, la peau 2 présente une forme de gouttière destinée à être recouverte par le bandeau périphérique 4, 5 pour constituer le corps creux.

Eventuellement, le bandeau 4, 5 peut comprendre, au niveau du corps creux 3, un réseau de nervures 12 agencées pour procurer au corps creux 3 une raideur déterminée.

Enfin, selon un quatrième mode de réalisation représenté sur la figure 6, le capot 1 est tel que :
- l'absorbeur 10 est en périphérie du capot 1,
- le capot 1 comprend en outre un bandeau 5 périphérique prolongeant la peau 2, et
- la doublure 11 est conformée pour que l'ensemble du bandeau 5 et de la doublure 11 forment localement un corps creux 3 constituant l'absorbeur 10.

Comme représenté sur la figure 6, le bandeau 5 comprend, au niveau du corps creux, un réseau de nervures agencé pour procurer au corps creux une raideur déterminée.

Dans les premier et deuxième modes de réalisation, l'absorbeur peut être situé en un endroit quelconque du capot 1. En particulier, la zone rigide 9 en regard de l'absorbeur 10 peut être une partie du moteur du véhicule automobile.

Dans les troisième et quatrième modes de réalisation, la zone rigide 9 est située en périphérie du capot 1 si bien que cette zone rigide 9 peut être constituée par une coupelle d'amortisseur.

Il est bien entendu que les modes de réalisation décrits ci-dessus ne présentent aucun caractère limitatif de la portée de l'invention.

## Revendications

1. Capot (1) destiné à être monté à l'avant d'un véhicule automobile, le capot (1) comprenant une face visible (7) et une face opposée (8), le capot (1) étant apte à prendre au moins une position fermée dans laquelle la face opposée (8) du capot (1) recouvre au moins une zone rigide (9) de l'avant du véhicule, la face opposée (8) comprenant au moins un absorbeur (10) agencé de façon à être en regard de la zone rigide (9) lorsque le capot (1) est en position fermée, le capot comprenant une peau (2) et une doublure (11), **caractérisé en ce que :**
- l'absorbeur (10) est en périphérie du capot (1),
- le capot (1) comprend un bandeau périphérique (4, 5) prolongeant la peau (2) en périphérie du capot (1),
- la doublure (11), ou la périphérie de la peau (2), est conformée pour que l'ensemble du bandeau (4, 5) et de la doublure (11), ou respectivement l'ensemble du bandeau (4, 5) et de la périphérie de la peau (2), forme bcalement un corps creux (3) constituant l'absorbeur (10).

2. Capot (1) selon la revendication 1, dans lequel la doublure (11) est conformée pour que l'ensemble du bandeau (4,5) et de la doublure (11) forme localement le corps creux (3) constituant l'absorbeur (10), dans lequel la doublure (11) comprend, au niveau du corps creux (3), un réseau de nervures (12) agencées pour procurer au corps creux (3) une raideur déterminée.

3. Capot (1) selon la revendication 1, dans lequel le bandeau (5) comprend, au niveau du corps creux (3), un réseau de nervures (12) agencées pour procurer au corps creux (3) une raideur déterminée.

4. Capot (1, 1') selon la revendication 1, constitué par au moins un élément constitutif de capot tel qu'une peau (2, 2'), le capot comportant au moins un corps creux (3, 3') de raideur déterminée à la périphérie du capot, le corps creux étant formé partiellement par un élément constitutif du capot et par un bandeau (4, 5) rapporté sur cet élément constitutif.

5. Capot selon la revendication 4, dans lequel le bandeau (4, 5) est rapporté sur une peau en acier (2, 2') d'un capot.

6. Capot selon la revendication 4 ou 5, dans lequel au moins un bandeau comprend des nervures disposées et calibrées selon qu'elles amortissent une tête enfant ou adulte et selon le recouvrement de la tête avec l'aile.

7. Capot selon l'une quelconque des revendications 4 à 6, dans lequel au moins un bandeau est intégré à la doublure de capot et réalise un cadre périphérique venant en appui sur des éléments de structure se trouvant dessous et fonctionnant globalement en compression jusqu'à générer un effondrement permettant de diminuer la décélération de la tête du piéton.

8. Capot selon l'une quelconque des revendications 4 à 7, dans lequel au moins un bandeau est rapporté et intègre un airbag, en favorisant son déploiement du fait de la présence d'une lame souple qui le fait déployer entre la peau et la doublure du capot.

9. Capot selon l'une quelconque des revendications 4 à 8, dans lequel la doublure de capot est bi-matière afin que le besoin en raideur au centre du capot soit assez faible et que la raideur sur la périphérie soit plus importante, notamment dans le cas où, à cause de la faible course d'enfoncement disponible, on envisage une rupture d'un plot venant s'écraser sur les coupelles d'amortisseur.

## Claims

1. A bonnet (1) for mounting on the front of a motor vehicle, the bonnet (1) having a visible face (7) and an opposite face (8), the bonnet (1) being suitable for occupying at least a closed position in which the opposite face (8) of the bonnet (1) covers at least one rigid zone (9) at the front of the vehicle, the opposite face (8) including at least one absorber (10) arranged to be in register with the rigid zone (9) when the bonnet (1) is in the closed position, the bonnet comprising a skin (2) and a liner (11), and being **characterized in that:**
· the absorber (10) is at the periphery of the bonnet (1);
· the bonnet (1) includes a peripheral strip (4, 5) extending the skin (2) at the periphery of the bonnet (1); and
· the liner (11), or the periphery of the skin (2), is shaped so that the assembly comprising the strip (4, 5) and the liner (11), or the assembly comprising the strip (4, 5) and the periphery of the skin (2), as the case may be, forms locally a hollow body (3) constituting the absorber (10).

2. A bonnet (1) according to claim 1, in which the liner (11) is shaped so that the assembly comprising the strip (4, 5) and the liner (11) forms locally the hollow body (3) constituting the absorber (10), wherein the liner (11) comprises, in the hollow body (3), an array of ribs (12) arranged to impart determined stiffness to the hollow body (3).

3. A bonnet (1) according to claim 1, wherein the strip (5) comprises, in the hollow body (3), an array of ribs (12) arranged to provide the hollow body (3) with determined stiffness.

4. A bonnet (1, 1') according to claim 1, constituted by at least one bonnet component element such as a skin (2, 2'), the bonnet including at least one hollow body (3, 3') of determined stiffness at the periphery of the bonnet, the hollow body being formed in part by a component element of the bonnet and by a strip (4, 5) fitted to said component element.

5. A bonnet according to claim 4, wherein the strip (4, 5) is fitted on a steel skin (2, 2') of a bonnet.

6. A bonnet according to claim 4 or claim 5, wherein at least one strip includes ribs disposed and calibrated depending on whether they are to absorb the shock of a child's or an adult's head, and depending on the overlap between the head and the wing.

7. A bonnet according to any one of claims 4 to 6, wherein at least one strip is incorporated in the bonnet liner and constitutes a peripheral frame bearing against structural elements therebeneath and operating overall in compression so as to generate a collapse that enables the deceleration of a pedestrian's head to be reduced.

8. A bonnet according to any one of claims 4 to 7, wherein at least one strip is fitted and incorporates an airbag, with deployment thereof being facilitated by the presence of a flexible blade that causes it to be deployed between the skin and the liner of the bonnet.

9. A bonnet according to any one of claims 4 to 8, wherein the bonnet liner is made of two materials so that the requirement for stiffness at the center of the bonnet is quite small and the stiffness at its periphery is greater, in particular when it is envisaged that a stud being flattened against the damper cups should break because of the small stroke available for being pushed in.

## Patentansprüche

1. Haube (1) bestimmt zur Montage am Vorderteil eines Kraftfahrzeugs, wobei die Haube (1) eine sichtbare Seite (7) und eine gegenüberliegende Seite (8) umfasst, wobei die Haube (1) wenigstens eine geschlossene Stellung einnehmen kann, in der die gegenüberliegende Seite (8) der Haube (1) wenigstens eine starre Zone (9) des Vorderteils des Fahrzeugs abdeckt, wobei die gegenüberliegende Seite (8) wenigstens einen so angeordneten Dämpfer (10) umfasst, dass dieser gegenüber der starren Zone (9) ist, wenn die Haube (1) in geschlossener Stellung ist, wobei die Haube eine Haut (2) und eine Verkleidung (11) umfasst, **dadurch gekennzeichnet, dass:**
- der Dämpfer (10) an der Peripherie der Haube (1) ist,
- die Haube (1) eine Peripheriebandleiste (4, 5) umfasst, welche die Haut (2) an der Peripherie der Haube (1) verlängert,
- die Verkleidung (11) bzw. die Peripherie der Haut (2) so gestaltet ist, dass die Gesamtheit aus Bandleiste (4, 5) und Verkleidung (11) bzw. jeweils die Gesamtheit aus Bandleiste (4, 5) und Peripherie der Haut (2) lokal einen Hohlkörper (3) bildet, der den Dämpfer (10) darstellt.

2. Haube (1) nach Anspruch 1, wobei die Verkleidung (11) so gestaltet ist, dass die Gesamtheit aus Bandleiste (4, 5) und Verkleidung (11) lokal den Hohlkörper (3) bildet, der den Dämpfer (10) darstellt, wobei die Verkleidung (11) auf Höhe des Hohlkörpers (3) ein Netz von Rippen (12) umfasst, die angeordnet sind, um dem Hohlkörper (3) eine definierte Steifheit zu geben.

3. Haube (1) nach Anspruch 1, wobei die Bandleiste (5) auf Höhe des Hohlkörpers (3) ein Netz von Rippen (12) umfasst, die angeordnet sind, um dem Hohlkörper (3) eine definierte Steifheit zu geben.

4. Haube (1, 1') nach Anspruch 1, bestehend aus wenigstens einem Bestandteil der Haube wie eine Haut (2, 2'), wobei die Haube wenigstens einen Hohlkörper (3, 3') mit definierter Steifheit an der Peripherie der Haube umfasst, wobei der Hohlkörper teilweise von einem Bestandteil der Haube und von einer Bandleiste (4, 5), die an diesem Bestandteil angebracht ist, gebildet wird.

5. Haube nach Anspruch 4, wobei die Bandleiste (4, 5) an einer Stahlhaut (2, 2') einer Haube angebracht ist.

6. Haube nach Anspruch 4 oder 5, wobei wenigstens eine Bandleiste so angeordnete und kalibrierte Rippen umfasst, dass diese einen Kinder- oder Erwachsenenkopf je nach Überdeckung des Kopfs mit dem Kotflügel abfedern.

7. Haube nach einem der Ansprüche 4 bis 6, wobei wenigstens eine Bandleiste in die Haubenverkleidung integriert ist und einen Peripherierahmen zum Abstützen auf unterhalb befindlichen Strukturelementen und allgemein unter Druck stehend, bis ein Bersten eintritt, das ein Verringern der Verzögerung des Kopfes des Fußgängers ermöglicht, darstellen.

8. Haube nach einem der Ansprüche 4 bis 7, wobei wenigstens eine Bandleiste angebracht ist und einen Airbag beinhaltet, wobei sein Entfalten **dadurch** begünstigt wird, dass eine flexible Leiste vorhanden ist, die ein Entfalten zwischen der Haut und der Verkleidung der Haube bewirkt.

9. Haube nach einem der Ansprüche 4 bis 8, wobei die Haubenverkleidung aus zwei Materialien besteht, um den Bedarf der Steifheit in der Mitte der Haube ausreichend gering zu halten und die Steifheit an der Peripherie möglichst groß zu halten, insbesondere für den Fall, dass aufgrund der Kürze des verfügbaren Eindringweges ein Brechen eines Kontakts, der sich an den Dämpfertellern staucht, vorgesehen ist.
